# EUROPEAN PATENT APPLICATION

(11) **EP 4 567 405 A1**
(43) Date of publication of application: **11.06.2025**
(21) Application number: 24212144.0
(22) Date of filing: 11.11.2024
(51) Int. Cl.: G01N 21/27, G01N 21/31, G01N 21/47

(54) **SPECTROSCOPIC ANALYSIS DEVICE AND SPECTROSCOPIC ANALYSIS METHOD**

(30) Priority: 08.12.2023 JP 2023208010
(71) Applicant: Yokogawa Electric Corporation, Tokyo 180-8750 (JP)
(72) Inventor: HARA, Risa, Musashino-shi, Tokyo, 180-8750 (JP); SARUYA, Toshiyuki, Musashino-shi, Tokyo, 180-8750 (JP); ISHII, Takeaki, Musashino-shi, Tokyo, 180-8750 (JP)
(74) Representative: Stöckeler, Ferdinand

(57) **Abstract**

A spectroscopic analysis device (1) according to the present disclosure includes an irradiator (10) configured to irradiate irradiation light on an object to be measured, a light receiver (40) configured to receive reflected light based on the irradiation light from the object to be measured, a controller (80) configured to analyze, based on the reflected light, an optical property of the object to be measured, and an operating portion (20) configured to guide the irradiation light by switching between a transmission space (W1) that guides the irradiation light to the object to be measured at an observation window (W) and a reference material (R) arranged in at least one of the observation window (W) and a tube (T1) covering the observation window (W).

## Description

### CROSS-REFERENCE TO RELATED APPLICATION

The present application claims priority to Japanese Patent Application No. 2023-208010 filed on December 8, 2023, the entire contents of which are incorporated herein by reference.

### TECHNICAL FIELD

The present disclosure relates to a spectroscopic analysis device and a spectroscopic analysis method.

### BACKGROUND

Technology for analyzing the optical properties of an object to be measured are known. For example, Patent Literature (PTL) 1 discloses a spectroscopic analysis device that enables more accurate and stable measurement of absorption spectra.

### CITATION LIST

### Patent Literature

PTL 1: JP 2011-052996 A

### SUMMARY

The conventional technology described in PTL 1 entails the arrangement of a reference material, with a known reflectance, that is necessary for calculating the reflectance of light at the object to be measured. The configuration of the conventional technology used in reference measurements to measure the reflected light power at the reference material is complex.

The present disclosure aims to provide a spectroscopic analysis device and a spectroscopic analysis method that can simplify the configuration used for reference measurements.

A spectroscopic analysis device according to several embodiments includes an irradiator configured to irradiate irradiation light on an object to be measured, a light receiver configured to receive reflected light based on the irradiation light from the object to be measured, a controller configured to analyze, based on the reflected light, an optical property of the object to be measured, and an operating portion configured to guide the irradiation light by switching between at least one transmission space that guides the irradiation light to the object to be measured at an observation window and at least one reference material arranged in at least one of the observation window and a tube covering the observation window.

This enables the spectroscopic analysis device to simplify the configuration used for the reference measurement to measure the reflected light power at the reference material. The operating portion of the spectroscopic analysis device guides the irradiation light by switching between the transmission space that leads the irradiation light to the object to be measured at the observation window and the reference material. This enables the spectroscopic analysis device to perform the reference measurement simply by changing the irradiation position of the irradiation light via the operating portion. The spectroscopic analysis device can therefore achieve a simple reference measurement or a calibration operation as a spectrometer without disassembly, cleaning, removal of the tube, and the like. The spectroscopic analysis device does not require a large separation between the optical system for sample measurement and the optical system for reference measurement as in the conventional technology, and the overall optical system in the spectroscopic analysis device can be simplified easily. The spectroscopic analysis device can perform both sample measurement and reference measurement without increasing the number of components and while maintaining the size of the device, since the reference material is attached to existing components such as a tube.

In the spectroscopic analysis device according to an embodiment, the transmission space and the reference material may be arranged at different positions from each other on concentric circles as viewed from a side of incidence of the irradiation light on the observation window, and the operating portion may include a change mechanism configured relatively to change an irradiation position of the irradiation light on the concentric circles. This enables the spectroscopic analysis device to perform the reference measurement simply by changing the irradiation position of the irradiation light on the concentric circles via the operating portion.

In the spectroscopic analysis device according to an embodiment, the irradiator may be arranged inside the tube. This enables the spectroscopic analysis device to compactly organize the entire optical system, thereby facilitating a reduction in size of the device overall.

In the spectroscopic analysis device according to an embodiment, the change mechanism may include a rotation mechanism configured to rotate a position of the irradiator around a central axis of the concentric circles. This enables the spectroscopic analysis device to perform the reference measurement simply by rotating the irradiation position of the irradiation light around the central axis of the concentric circles via the operating portion.

In the spectroscopic analysis device according to an embodiment, the reference material may be fixed together with the transmission space at the observation window, and the change mechanism may include a first rotation mechanism configured to rotate the tube around the central axis. This enables the spectroscopic analysis device to perform the reference measurement simply by rotating the tube around the central axis of the concentric circles via the operating portion.

In the spectroscopic analysis device according to an embodiment, the reference material may be fixed to the tube, and the change mechanism may include a second rotation mechanism configured to rotate a position of an inner tube around the central axis, the inner tube being arranged inside the tube and housing the irradiator. This enables the spectroscopic analysis device to perform the reference measurement simply by rotating the position of the inner tube around the central axis of the concentric circles via the operating portion.

In the spectroscopic analysis device according to an embodiment, the reference material may be fixed together with the transmission space at the observation window, and the change mechanism may include a third rotation mechanism configured to rotate the observation window around a central axis of the concentric circles. This enables the spectroscopic analysis device to perform the reference measurement simply by rotating the observation window via the operating portion to rotate the irradiation position of the irradiation light relatively.

In the spectroscopic analysis device according to an embodiment, the change mechanism may include a first slide mechanism configured to translate the irradiator inside the tube. This enables the spectroscopic analysis device to perform the reference measurement simply by translating the irradiation position of the irradiation light via the operating portion.

In the spectroscopic analysis device according to an embodiment, the reference material may be fixed together with the transmission space at the observation window, and the change mechanism may include a second slide mechanism configured to translate the observation window. This enables the spectroscopic analysis device to perform the reference measurement simply by translating the observation window via the operating portion to translate the irradiation position of the irradiation light relatively.

In the spectroscopic analysis device according to an embodiment, the reference material may be fixed together with the transmission space at the observation window, and the irradiator may be arranged outside the tube. This enables the spectroscopic analysis device to omit the space for arrangement of the irradiator inside the tube, thereby facilitating a reduction in size of the tube.

In the spectroscopic analysis device according to an embodiment, the change mechanism may include a fourth rotation mechanism configured to rotate the tube around a central axis of the tube. This enables the spectroscopic analysis device to perform the reference measurement simply by rotating the tube around the central axis thereof via the operating portion.

In the spectroscopic analysis device according to an embodiment, the change mechanism may include a fifth rotation mechanism configured to rotate the observation window around a central axis of the concentric circles. This enables the spectroscopic analysis device to perform the reference measurement simply by rotating the observation window via the operating portion to rotate the irradiation position of the irradiation light relatively.

In the spectroscopic analysis device according to an embodiment, the change mechanism may include a third slide mechanism configured to translate the tube. This enables the spectroscopic analysis device to perform the reference measurement simply by translating the irradiation position of the irradiation light via the operating portion.

In the spectroscopic analysis device according to an embodiment, the change mechanism may include a fourth slide mechanism configured to translate the observation window. This enables the spectroscopic analysis device to perform the reference measurement simply by translating the observation window via the operating portion to translate the irradiation position of the irradiation light relatively.

In the spectroscopic analysis device according to an embodiment, the at least one transmission space may include a plurality of transmission spaces with different transmittances, and the operating portion may be configured to guide the irradiation light to one transmission space, among the plurality of transmission spaces, selected according to at least one of an intensity of the irradiation light and a type of the object to be measured. This enables the spectroscopic analysis device to perform the sample measurement accurately by associating the transmission spaces with various intensities of irradiation light. Similarly, this enables the spectroscopic analysis device to perform the sample measurement accurately by associating the transmission spaces with various types of objects to be measured.

In the spectroscopic analysis device according to an embodiment, the at least one reference material may include a plurality of reference materials with different reflectances, and the operating portion may be configured to guide the irradiation light to one reference material, among the plurality of reference materials, selected according to a type of the object to be measured. This enables the spectroscopic analysis device to perform the reference measurement accurately by associating the reference materials with various types of objects to be measured.

A spectroscopic analysis method according to several embodiments includes irradiating irradiation light on an object to be measured, receiving reflected light based on the irradiation light from the object to be measured, analyzing, based on the reflected light, an optical property of the object to be measured, and guiding the irradiation light by switching between a transmission space that guides the irradiation light to the object to be measured in an observation window and a reference material arranged in at least one of the observation window and a tube covering the observation window.

This enables a spectroscopic analysis device performing the spectroscopic analysis method to simplify the configuration used for the reference measurement to measure the reflected light power at the reference material. The spectroscopic analysis device guides the irradiation light by switching between the transmission space that leads the irradiation light to the object to be measured at the observation window and the reference material. This enables the spectroscopic analysis device to perform the reference measurement simply by changing the irradiation position of the irradiation light. The spectroscopic analysis device can therefore achieve a simple reference measurement or a calibration operation as a spectrometer without disassembly, cleaning, removal of the tube, and the like. The spectroscopic analysis device does not require a large separation between the optical system for sample measurement and the optical system for reference measurement as in the conventional technology, and the overall optical system in the spectroscopic analysis device can be simplified easily. The spectroscopic analysis device can perform both sample measurement and reference measurement without increasing the number of components and while maintaining the size of the device, since the reference material is attached to existing components such as a tube.

According to the present disclosure, a spectroscopic analysis device and a spectroscopic analysis method that can simplify the configuration used for reference measurements can be provided.

### BRIEF DESCRIPTION OF THE DRAWINGS

In the accompanying drawings:
FIG. 1 is a first schematic diagram illustrating an example configuration of a spectroscopic analysis device according to a first embodiment of the present disclosure;
FIG. 2 is a second schematic diagram illustrating an example configuration of a spectroscopic analysis device according to the first embodiment of the present disclosure;
FIG. 3 is a first schematic diagram of the reference material and observation window in FIG. 1, viewed from the side of incidence of the irradiation light on the observation window;
FIG. 4 is a second schematic diagram of the reference material and observation window in FIG. 1, viewed from the side of incidence of the irradiation light on the observation window;
FIG. 5 is a flowchart illustrating an example of operations of the spectroscopic analysis device in FIG. 1;
FIG. 6 is a first schematic diagram illustrating an example configuration of a spectroscopic analysis device according to a second embodiment of the present disclosure;
FIG. 7 is a second schematic diagram illustrating an example configuration of a spectroscopic analysis device according to the second embodiment of the present disclosure;
FIG. 8 is a first schematic diagram illustrating an example configuration of a spectroscopic analysis device according to a third embodiment of the present disclosure;
FIG. 9 is a second schematic diagram illustrating an example configuration of a spectroscopic analysis device according to the third embodiment of the present disclosure;
FIG. 10 is a first schematic diagram illustrating an example configuration of a spectroscopic analysis device according to a fourth embodiment of the present disclosure; and
FIG. 11 is a second schematic diagram illustrating an example configuration of a spectroscopic analysis device according to a fourth embodiment of the present disclosure.

### DETAILED DESCRIPTION

The background and problems with conventional technology are described in greater detail.

The reflectance of light at the object to be measured is calculated by dividing the reflected light power at the object to be measured by the reflected light power at the reference material whose reflectance is known. In spectroscopic analysis devices, the reflected light power and other measured values are affected by factors such as fluctuations of the light source and deterioration of the light guiding means and focusing means. Spectroscopic analysis devices therefore periodically need to perform reference measurements using a reference material to compensate for such effects. Manually performing such periodic reference measurements requires many man-hours and is inefficient. Various mechanisms to perform reference measurements automatically have therefore been considered.

For example, in the spectroscopic analysis device described in PTL 1, a reference material with a known reflectance is arranged inside a probe. The reference material is necessary for calculating the reflectance of light at the object to be measured. The spectroscopic analysis device has a mirror inside the probe to perform the reference measurement. The spectroscopic analysis device has a mechanism that automatically maintains the mirror arranged inside the probe at an angle or disposes the mirror horizontally.

The spectroscopic analysis device described in PTL 1 automatically switches between sample measurement, for measuring the reflected light power at the object to be measured, and reference measurement by using the mechanism to operate the mirror arranged inside the probe. For example, the spectroscopic analysis device automatically performs the reference measurement by operating the mechanism to maintain the mirror arranged inside the probe at an angle.

However, in the conventional technology described in PTL 1, the spectroscopic analysis device requires the additional inclusion of the mirror and the mechanism within the device in order to perform the reference measurement. The spectroscopic analysis device needed to include, within the device, the optical system for sample measurement and the optical system for reference measurement, while maintaining a large separation between these systems. The overall optical system of the spectroscopic analysis device therefore becomes complex. Additionally, the configuration used for reference measurement is complex.

It would be helpful to provide a spectroscopic analysis device and a spectroscopic analysis method that can simplify the configuration used for reference measurements. As an example, it would be helpful to achieve a simpler configuration than conventional technology by arranging a reference material on the surface of an observation window, or on a tube that covers the observation window, and changing the measurement position by rotating the tube or the like.

Embodiments of the present disclosure are mainly described below with reference to the drawings.

### (First Embodiment)

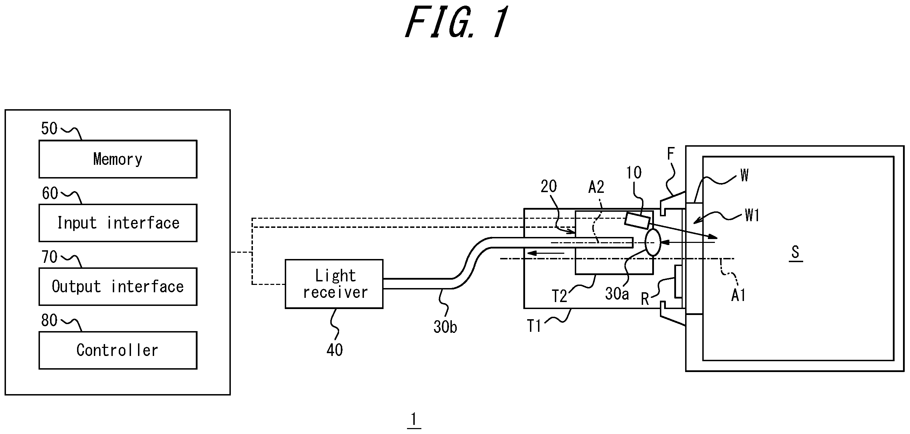

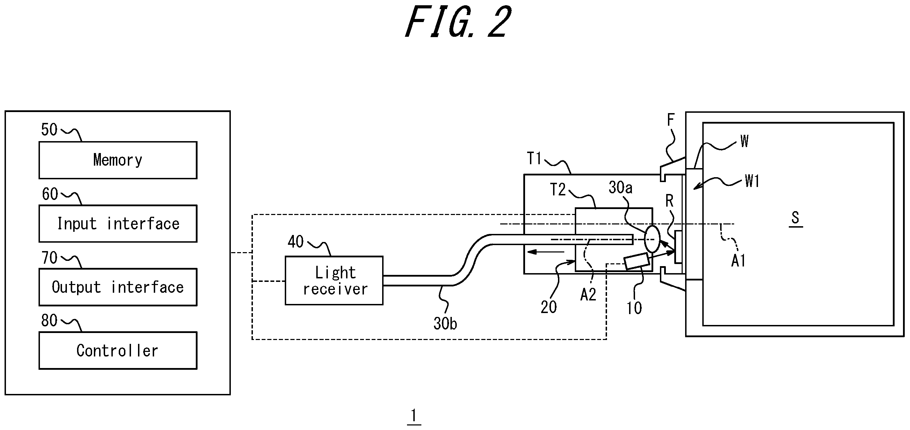

FIG. 1 is a first schematic diagram illustrating an example configuration of a spectroscopic analysis device 1 according to a first embodiment of the present disclosure. FIG. 2 is a second schematic diagram illustrating an example configuration of the spectroscopic analysis device 1 according to the first embodiment of the present disclosure. With reference to FIGS. 1 and 2, an example of the configuration and functions of the spectroscopic analysis device 1 according to the first embodiment are mainly described.

The spectroscopic analysis device 1 according to the first embodiment analyzes the optical properties of an object to be measured, which is arranged inside a sample chamber S. In greater detail, the spectroscopic analysis device 1 irradiates irradiation light onto the object to be measured through an observation window W arranged in the sample chamber S. The spectroscopic analysis device 1 receives reflected light based on the irradiation light from the object to be measured. Based on the received reflected light, the spectroscopic analysis device 1 analyzes an optical property of the object to be measured.

In the present disclosure, examples of the "sample chamber S" include any space that has the function of storing or transporting an object to be measured. The sample chamber S is configured by a tank and piping or the like. In the drawings such as FIGS. 1 and 2, the sample chamber S is depicted as a cube as an example, but any shape may be adopted, such as a cube, a rectangular solid, or a cylinder. The "observation window W" includes, for example, any window with a material having the function of transmitting (allowing to pass therethrough) light at the wavelength of the irradiation light used by the spectroscopic analysis device 1 for optical analysis of the optical properties of the object to be measured, which is arranged inside the sample chamber S. The observation window W is formed by a material such as acrylic resin, glass, quartz, sapphire, or diamond. The observation window W may have a thickness of 10 mm or more to ensure sufficiently high impact resistance, pressure resistance, and the like. To maintain airtightness, the connection between the observation window W and the sample chamber S may, for example, be based on a sight glass structure or based on a fixed structure such as clamps and screws. The observation window W is structured to penetrate a portion of the wall of the sample chamber S.

The "object to be measured" may be any object, such as a solid, a liquid, or a slurries. Examples of the object to be measured include an object such that diffuse reflection occurs when the spectroscopic analysis device 1 analyzes the optical property of the object to be measured using a diffuse reflection method. Examples of the "optical property" include properties such as the wavelength dependence of the reflectance of light. As one example, the spectroscopic analysis device 1 analyzes the reflectance spectrum of light at the object to be measured based on the diffuse reflectance method.

The observation window W is covered by a tube T1 from the side of incidence of the irradiation light on the observation window W. The tube T1 is arranged to be perpendicular to the observation window W. The tube T1 has arranged therein an irradiator 10, an operating portion 20, a light collector 30a, and a portion of a light guide 30b, which are described below. The tube T1 is configured so that no foreign matter can enter the interior of the tube T1 from the outside, so as not to affect the analysis, by the spectroscopic analysis device 1, of the optical characteristics of the object to be measured. The interior of the tube T1 may be a vacuum or may be filled with a gas such as nitrogen. The interior of the tube T1 is sealed and maintained at a pressure appropriate for the object to be measured. The tube T1 may be attached to the sample chamber S by a fixture F.

An inner tube T2 is further arranged inside the tube T1. The inner tube T2 has arranged therein the irradiator 10, a portion of the light collector 30a, and a portion of a light guide 30b, which are described below. The inner tube T2 may be configured so that no foreign matter can enter the interior of the inner tube T2 from the outside, so as not to affect the analysis, by the spectroscopic analysis device 1, of the optical characteristics of the object to be measured. The interior of the tube T2 may be a vacuum or may be filled with a gas such as nitrogen to match the tube T1.

The inner tube T2 is driven by the operating portion 20, described below, so that the position of the inner tube T2 is rotated inside the tube T1 around a central axis A1 of the tube T1. The inner tube T2 is arranged to be positioned eccentrically from the cross-sectional center in the radial direction within a cross-section of the tube T1. A central axis A2 of the inner tube T2 is displaced from the central axis A1 of the tube T1 in the radial direction. Therefore, the position of the central axis A2 of the inner tube T2 rotates around the central axis A1 of the tube T1 by the inner tube T2 being driven via the operating portion 20.

A reference material R with a known reflectance, which is necessary to calculate the reflectance of light at the object to be measured, is arranged and fixed on the side of the tube T1 covering the observation window W. For example, the reference material R is arranged on the inside of the surface of the tube T1 that faces the observation window W. The reference material R is arranged to be positioned eccentrically from the cross-sectional center in the radial direction within a cross-section of the tube T1. The reference material R is displaced from the central axis A1 of the tube T1 in the radial direction.

The "reference material R" in the present disclosure may include any material that has a reflectance of light of substantially 100%. Examples of the reference material R include a standard white plate, barium sulfate, Teflon, an aluminum mirror with a rough surface finish, a gold mirror, and the like, which have the function of light reflection with high reflectance. The reference material R may have a bowl-shaped curved structure to enhance its reflectivity. While not depicted in FIG. 1, further optical components such as mirrors and lenses may be arranged inside the tube T1 to guide light to the reference material R. The light reflectance of the "reference material R" need not necessarily be substantially 100%. It suffices for the light reflectance to be a known reflectance that is not susceptible to change over time.

The fixture F includes any fixture that has the function of attaching the tube T1 to the sample chamber S in a slidable manner. The fixation between the fixture F and the sample chamber S may be achieved by the same type of clamps used in fixing the observation window W. The fixture F may have a structure that allows dry air to flow into or seal the space between the tube T1 and the observation window W to reduce condensation or the like at the observation window W.

The fixture F may have a structure that allows only the tube T1 to be removed while still fixed to the sample chamber S, so that the tube T1 can be removed while the manufacturing process is being carried out. For example, the fixture F may have a structure to be fastened by screws to a fixing plate sandwiched between grooves formed at the end of the tube T1. The fixture F may instead have a clamping structure. The fixture F may have a mechanism for rotating the tube T1. For example, the fixture F may have a mechanism for a rotating base corresponding to the structure on the tube T1 side. The position of the rotating base may be controlled by the rotating base being driven by a motor, such as a stepping motor, and an air-driven actuator.

The spectroscopic analysis device 1 includes the irradiator 10, the operating portion 20, the light collector 30a, the light guide 30b, a light receiver 40, a memory 50, an input interface 60, an output interface 70, and a controller 80.

The irradiator 10 has a light source such as a lamp, a light emitting diode (LED), or a semiconductor laser. Examples of the lamp include halogen lamps, tungsten lamps, and xenon lamps. The irradiator 10 may further have a light-collecting element such as a lens. The irradiator 10 irradiates irradiation light having wavelengths that match the optical properties of the object to be measured that is to be analyzed using the spectroscopic analysis device 1. The wavelengths of the irradiation light irradiated by the irradiator 10 include, for example, the wavelength at which the irradiation light is reflected by the object to be measured. The wavelengths of the irradiation light include, for example, wavelengths in the ultraviolet region, visible region, near-infrared region, and other infrared regions.

In the example illustrated in FIG. 1, the irradiation light emitted from the irradiator 10 enters inside the sample chamber S through the observation window W and is reflected by the object to be measured that is arranged inside the sample chamber S. In the example illustrated in FIG. 2, the irradiation light emitted from the irradiator 10 is reflected by the reference material R.

The operating portion 20 includes a change mechanism configured to change the irradiation position of the irradiation light from the irradiator 10. The change mechanism includes a rotation mechanism configured to rotate the position of the inner tube T2, which is arranged inside the tube T1 and houses the irradiator 10, around the central axis A1. The rotation mechanism has, for example, grooves and steps formed on the circumference of the inner wall of the tube T1 that function as a guide for moving the position of the inner tube T2. In addition, the rotation mechanism has any appropriate motor, such as a stepping motor, and an air-driven actuator or other component to drive and rotate the inner tube T2.

The operating portion 20 guides the irradiation light by switching between the below-described transmission space W1, which guides the irradiation light to the object to be measured at the observation window W, and the reference material R, which is arranged in the tube T1 covering the observation window W. For example, the operating portion 20 drives the inner tube T2 so that the position of the inner tube T2 is rotated inside the tube T1 around the central axis A1 of the tube T1. The operating portion 20 guides the irradiation light to the transmission space W1 by driving and controlling the inner tube T2 to a first rotational position illustrated in FIG. 1. The operating portion 20 guides the irradiation light to the reference material R by driving and controlling the inner tube T2 to a second rotational position illustrated in FIG. 2.

The light collector 30a includes any optical elements for collecting light. Examples of optical elements include optical lenses and integrating spheres. In the example illustrated in FIG. 1, the light collector 30a efficiently collects the reflected light from the object to be measured, which is emitted from the sample chamber S through the observation window W, on the light guide 30b. In the example illustrated in FIG. 2, the light collector 30a efficiently collects the reflected light from the reference material R on the light guide 30b.

The light guide 30b includes any optical elements for guiding light. Examples of the optical elements include optical fibers, optical couplers, and mirrors. In the example illustrated in FIG. 1, the light guide 30b accepts the reflected light from the object to be measured, which is arranged inside the sample chamber S, through the observation window W and the light collector 30a. In the example illustrated in FIG. 2, the light guide 30b accepts the reflected light from the reference material R through the light collector 30a. The light guide 30b has the function of accepting the reflected light from the object to be measured and the reflected light from the reference material R and directing the reflected light to the light receiver 40.

The light receiver 40 has a photodetector including a light receiving element such as a photodiode. In the example illustrated in FIG. 1, the light receiver 40 receives reflected light, which is based on the irradiation light irradiated by the irradiator 10 onto the object to be measured and indicates an optical property of the object to be measured. In the example illustrated in FIG. 2, the light receiver 40 receives reflected light based on the irradiation light irradiated by the irradiator 10 onto the reference material R.

The photodetector of the light receiver 40 receives the reflected light guided by the light collector 30a and the light guide 30b, converts the reflected light into an electric signal, and outputs the electric signal to the controller 80 or the like. The wavelength band that can be received by the photodetector of the light receiver 40 includes the wavelength band of the reflected light. The photodetector of the light receiver 40 has detection sensitivity at the wavelengths of the reflected light. The light receiver 40 has the function of detecting the intensity of the reflected light. Additionally, the light receiver 40 may further have spectral functions such as diffraction gratings, interferometers, and filters.

The memory 50 includes any storage device, such as a hard disk drive (HDD), a solid state drive (SSD), an electrically erasable programmable read-only memory (EEPROM), a read-only memory (ROM), and a random access memory (RAM). The memory 50 stores information necessary to realize the operations of the spectroscopic analysis device 1. The memory 50 stores information obtained by operations of the spectroscopic analysis device 1. For example, the memory 50 stores system programs, application programs, and various data acquired by any means such as communication.

The memory 50 may function as a main storage apparatus, an auxiliary storage apparatus, or a cache memory. The memory 50 is not limited to being internal to the spectroscopic analysis device 1 and may include an external memory apparatus connected through a digital input/output port or the like, such as universal serial bus (USB).

The input interface 60 includes one or more interfaces for input to detect user input and acquire input information based on user operations. Examples of the interfaces for input include a physical key, a capacitive key, a touchscreen provided integrally with a display of the output interface 70, an imaging module such as a camera, a microphone that receives audio input, or the like.

The output interface 70 includes one or more interfaces for output to output information and notify the user. Examples of the interfaces for output include a display that outputs information as images, a speaker that outputs information as sound, a vibrator that outputs information as vibration, and the like. Examples of the display include a liquid crystal display (LCD) and an organic electro luminescence (EL) display.

The controller 80 includes one or more processors. In the present disclosure, the "processor" is a general purpose processor or a dedicated processor specialized for particular processing, but these examples are not limiting. Examples of the controller 80 include a central processing unit (CPU). The controller 80 is communicably connected with each component of the spectroscopic analysis device 1 and controls operations of the spectroscopic analysis device 1 overall. For example, the controller 80 controls the irradiator 10, the operating portion 20, and the light receiver 40. In FIGS. 1 and 2, the control lines for the controller 80 are illustrated as dashed lines. In addition to such control processes, the controller 80 analyzes an optical property of the object to be measured based on the reflected light received by the light receiver 40. The memory 50, the input interface 60, the output interface 70, and the controller 80 may, for example, be realized by a single computer or may be configured as a plurality of devices.

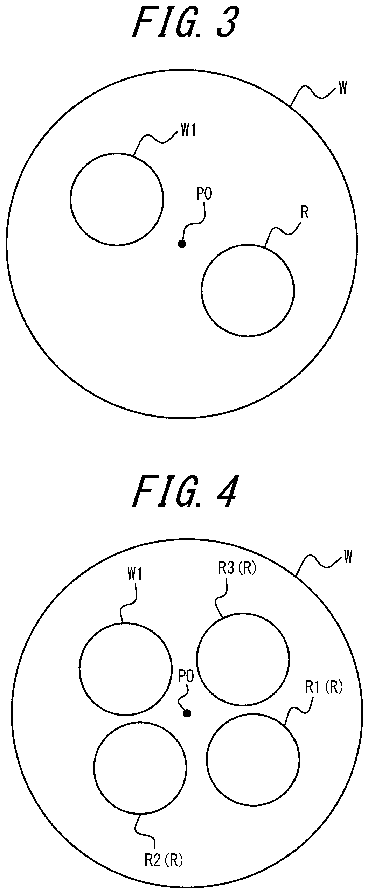

FIG. 3 is a first schematic diagram of the reference material R and the observation window W in FIG. 1, viewed from the side of incidence of the irradiation light on the observation window W.

As illustrated in FIG. 3, a portion of the observation window W includes the transmission space W1, which guides the irradiation light from the irradiator 10 to the object to be measured arranged inside the sample chamber S. Via the transmission space W1, the observation window W may define a range through which the irradiation light passes during the sample measurement using the object to be measured. In this case, a film such as a transparent or colored shatterproof film, a heat-blocking film, and the like may be attached to the portion of the observation window W other than the transmission space W1.

The transmission space W1 arranged in the observation window W and the reference material R arranged in the tube T1 are arranged at different positions from each other on concentric circles as viewed from the side of incidence of the irradiation light on the observation window W. For example, the transmission space W1 and the reference material R are arranged on concentric circles centered on the center point P0 of the observation window W, which is circular as viewed from the side of incidence of the irradiation light on the observation window W. A first circle, having the center of the transmission space W1 on the circumference thereof, and a second circle, having the center of the reference material R on the circumference thereof, are centered on the center point P0 of the observation window W. The radius of the first circle and the radius of the second circle may be identical or different from each other.

As also illustrated in FIGS. 1 and 2, the case in which the central axis A1 of the tube T1 passes through the center point P0 of the observation window W will be explained as an example. In other words, the case in which the central axis A1 and the central axis of the concentric circles on which the transmission space W1 and the reference material R are arranged coincide with each other will be explained as an example.

In this case, the change mechanism of the operating portion 20 relatively changes the irradiation position of the irradiation light from the irradiator 10 on the concentric circles. For example, the rotation mechanism of the operating portion 20 included in the change mechanism rotates the position of the inner tube T2, which is arranged inside the tube T1 and houses the irradiator 10, around the central axis of the concentric circles. The rotation mechanism of the operating portion 20 thereby rotates the position of the irradiator 10 around the central axis of the concentric circles.

The rotation mechanism of the operating portion 20 drives and controls the inner tube T2 to the first rotational position illustrated in FIG. 1, thereby guiding the irradiation light to the transmission space W1 illustrated in FIG. 3. The irradiation position of the irradiation light from the irradiator 10 on the concentric circles matches the transmission space W1. This enables sample measurement, by the controller 80, using the object to be measured. In the present disclosure, "sample measurement" includes, for example, measurement of the reflected light power of the irradiation light irradiated from the irradiator 10 towards the object to be measured.

On the other hand, the rotation mechanism of the operating portion 20 drives and controls the inner tube T2 to the second rotational position illustrated in FIG. 2, thereby guiding the irradiation light to the reference material R instead of the transmission space W1 illustrated in FIG. 3. The irradiation position of the irradiation light from the irradiator 10 on the concentric circles matches the reference material R. This enables reference measurement, by the controller 80, using the reference material R. In the present disclosure, "reference measurement" includes, for example, measurement of the reflected light power of the irradiation light irradiated from the irradiator 10 towards the reference material R.

FIG. 4 is a second schematic diagram of the reference material R and the observation window W in FIG. 1, viewed from the side of incidence of the irradiation light on the observation window W.

For example, the case illustrated in FIG. 3, in which there is only one each of the transmission space W1 arranged in the observation window W and the reference material R arranged in the tube T1, is not limiting. The number of each may be freely determined.

For example, as illustrated in FIG. 4, three reference materials R with different reflectances from each other may be arranged on concentric circles for one transmission space W1. In this case, the operating portion 20 may guide the irradiation light from the irradiator 10 to one reference material R, among the plurality of reference materials R with different reflectances, selected according to the type of the object to be measured. The controller 80 may identify the reference material R to be selected by the operating portion 20 based on input information from the user obtained, for example, via the input interface 60, and may control the operating portion 20.

For example, the rotation mechanism of the operating portion 20 may guide the irradiation light to the reference material R1 illustrated in FIG. 4 by driving and controlling the inner tube T2 to the second rotational position illustrated in FIG. 2. For example, the rotation mechanism of the operating portion 20 may guide the irradiation light to the reference material R2 illustrated in FIG. 4 by driving and controlling the inner tube T2 to the third rotational position. For example, the rotation mechanism of the operating portion 20 may guide the irradiation light to the reference material R3 illustrated in FIG. 4 by driving and controlling the inner tube T2 to the fourth rotational position.

There may be a plurality of types of reference materials R. For example, a plurality of reference materials R may include both a material for intensity correction and a material for wavelength correction. Alternatively, the reference materials R may have the function of reflecting light with a freely-determined probability. For example, the reference materials R may include a material that reflects light to some extent and a material that does not reflect light at all. The plurality of reference materials R may have different reflectances from each other.

For example, for one or more reference materials R, a plurality of transmission spaces W1 with different transmittances from each other may be arranged on concentric circles. In this case, the operating portion 20 may guide the irradiation light from the irradiator 10 to one transmission space W1, among the plurality of transmission spaces W1 with different transmittances, selected according to at least one of the intensity of the irradiation light and the type of the object to be measured. The controller 80 may identify the transmission space W1 to be selected by the operating portion 20 based on input information from the user obtained, for example, via the input interface 60, and may control the operating portion 20.

To make the transmittances different from each other in the plurality of transmission spaces W1, the transmission spaces W1 may, for example, include a filter for light intensity attenuation with a predetermined attenuation rate. This reduces the damage caused by the irradiation light to the object to be measured.

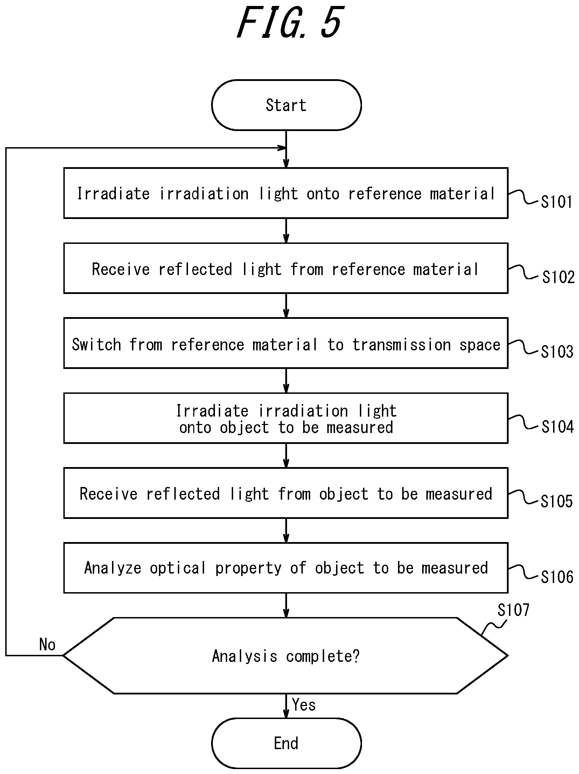

FIG. 5 is a flowchart illustrating an example of operations of the spectroscopic analysis device 1 in FIG. 1. With reference to FIG. 5, an example of a spectroscopic analysis method performed by the spectroscopic analysis device 1 in FIG. 1 is mainly described. The flowchart illustrated in FIG. 5 illustrates an example of the basic process flow when the controller 80 of the spectroscopic analysis device 1 analyzes an optical property of the object to be measured.

In step S101, the controller 80 of the spectroscopic analysis device 1 controls the irradiator 10 so that the irradiator 10 irradiates irradiation light on the reference material R.

In step S102, the controller 80 of the spectroscopic analysis device 1 causes the light receiver 40 to receive the reflected light, which is based on the irradiation light irradiated in step S101 and is from the reference material R.

The controller 80 of the spectroscopic analysis device 1 acquires a signal value R(λ) regarding the reflected light power of the reflected light from the reference material R by the reference measurement in step S101 and step S102.

In step S103, the controller 80 of the spectroscopic analysis device 1 controls the operating portion 20 so that the object towards which the irradiation light from the irradiator 10 is irradiated switches from the reference material R to the transmission space W1. For example, the controller 80 controls the operating portion 20 to rotate the inner tube T2, thereby changing the irradiation position of the irradiation light from the irradiator 10.

In this case, the memory 50 may store information indicating the first rotational position of the inner tube T2, as illustrated in FIG. 1, when the irradiation light is irradiated towards the object to be measured through the transmission space W1 and the second rotational position of the inner tube T2, as illustrated in FIG. 2, when the irradiation light is irradiated towards the reference material R. For example, the controller 80 acquires this information by input from the user using the input interface 60 of the spectroscopic analysis device 1 and stores the information in the memory 50. The memory 50 thus stores the information. The controller 80 may read this information by referring to the memory 50 and automatically perform rotation of the position of the inner tube T2 via the rotation mechanism of the operating portion 20.

In step S104, the controller 80 of the spectroscopic analysis device 1 controls the irradiator 10 so that the irradiator 10 irradiates irradiation light on the object to be measured.

In step S105, the controller 80 of the spectroscopic analysis device 1 causes the light receiver 40 to receive the reflected light, which is based on the irradiation light irradiated in step S104 and is from the object to be measured.

The controller 80 of the spectroscopic analysis device 1 acquires a signal value S(k) regarding the reflected light power of the reflected light from the object to be measured, which is arranged inside the sample chamber S, by the sample measurement in step S104 and step S105.

In step S106, the controller 80 of the spectroscopic analysis device 1 analyzes the optical property of the object to be measured based on the reflected light received in step S105. For example, the controller 80 determines the reflectance by calculating S(λ)/R(λ) × 100 (%) based on the signal value R(λ) obtained by the reference measurement and the signal value S(λ) obtained by the sample measurement. In a case in which the reflectance of the reference material R is not approximately 100%, the controller 80 may multiply S(λ)/R(λ) by the reflectance of the reference material R to determine the reflectance. The controller 80 may output the information on the optical property of the analyzed object to be measured from the output interface 70 to the user.

In step S107, the controller 80 of the spectroscopic analysis device 1 determines whether the periodic analysis of the optical property of the object to be measured is complete. The controller 80 ends the process when determining that the analysis is complete. The controller 80 executes the process in step S101 again when determining that the analysis is not complete. The controller 80 of the spectroscopic analysis device 1 periodically performs reference measurement and sample measurement by repeating the process from step S101 onward at freely-determined time intervals. By repeating the steps from step S101 to step S107 multiple times in succession, the controller 80 can also improve the measurement accuracy by correcting errors associated with changes over time.

According to the above-described spectroscopic analysis device 1 of the first embodiment, the configuration used for the reference measurement to measure the reflected light power at the reference material R can be simplified. The operating portion 20 of the spectroscopic analysis device 1 guides the irradiation light by switching between the transmission space W1, which guides the irradiation light to the object to be measured at the observation window W, and the reference material R, which is arranged in the tube T1 covering the observation window W. This enables the spectroscopic analysis device 1 to perform the reference measurement simply by changing the irradiation position of the irradiation light via the operating portion 20. The spectroscopic analysis device 1 can therefore achieve a simple reference measurement or a calibration operation as a spectrometer without disassembly, cleaning, removal of the tube T1, and the like. The spectroscopic analysis device 1 does not require a large separation between the optical system for sample measurement and the optical system for reference measurement as in the conventional technology, and the overall optical system in the spectroscopic analysis device 1 can be simplified easily. The spectroscopic analysis device 1 can perform both sample measurement and reference measurement without increasing the number of components and while maintaining the size of the device, since the reference material R is attached to existing components such as the tube T1.

The operating portion 20 includes a change mechanism configured relatively to change the irradiation position of the irradiation light from the irradiator 10 relative to the concentric circles. This enables the spectroscopic analysis device 1 to perform the reference measurement simply by changing the irradiation position of the irradiation light on the concentric circles via the operating portion 20.

The irradiator 10 is arranged inside the tube T1. This enables the spectroscopic analysis device 1 to compactly organize the entire optical system, thereby facilitating a reduction in size of the device overall.

The change mechanism includes a rotation mechanism that rotates the position of the irradiator 10 around the central axis of the concentric circles. This enables the spectroscopic analysis device 1 to perform the reference measurement simply by rotating the irradiation position of the irradiation light around the central axis of the concentric circles via the operating portion 20.

The rotation mechanism rotates the position of the inner tube T2, which is arranged inside the tube T1 and houses the irradiator 10, around the central axis of the concentric circles. This enables the spectroscopic analysis device 1 to perform the reference measurement simply by rotating the position of the inner tube T2 around the central axis of the concentric circles via the operating portion 20.

The operating portion 20 guides the irradiation light to one transmission space W1, among the plurality of transmission spaces W1 with different transmittances, selected according to at least one of the intensity of the irradiation light and the type of the object to be measured. This enables the spectroscopic analysis device 1 to perform the sample measurement accurately by associating the transmission spaces W1 with various intensities of irradiation light. Similarly, this enables the spectroscopic analysis device 1 to perform the sample measurement accurately by associating the transmission spaces W1 with various types of objects to be measured.

The operating portion 20 guides the irradiation light to one reference material R, among the plurality of reference materials R with different reflectances, selected according to the type of the object to be measured. This enables the spectroscopic analysis device 1 to perform the reference measurement accurately by associating the reference materials R with various types of objects to be measured.

In the first embodiment, the transmission space W1 and the reference material R have been described as being arranged at different positions from each other on concentric circles as viewed from the side of incidence of the irradiation light on the observation window W, but this configuration is not limiting. The transmission space W1 and the reference material R may have any positional relationship that is compatible with switching the irradiation position of the irradiation light via the operating portion 20. For example, the transmission space W1 and the reference material R need not be arranged on concentric circles as viewed from the side of incidence of the irradiation light on the observation window W.

Consequently, instead of a change mechanism that relatively changes the irradiation position of the irradiation light on the concentric circles, the operating portion 20 may include any change mechanism that can relatively change the irradiation position of the irradiation light according to a freely-determined positional relationship between the transmission space W1 and the reference material R.

In the first embodiment, the change mechanism has been described as including a rotation mechanism that rotates the position of the irradiator 10 around the central axis of the concentric circles, but this configuration is not limiting. The change mechanism may include a slide mechanism that translates the irradiator 10 within the tube T1. The slide mechanism may translate the inner tube T2, which contains the irradiator 10, inside the tube T1. This enables the spectroscopic analysis device 1 to perform the reference measurement simply by translating the irradiation position of the irradiation light via the operating portion 20.

In the first embodiment, the reference material R has been described as being arranged in the tube T1 covering the observation window W, but this configuration is not limiting. The reference material R may be arranged in at least one of the observation window W and the tube T1 covering the observation window W. For example, the reference material R may be fixed in the observation window W together with the transmission space W1.

In this case, the change mechanism may include a rotation mechanism that rotates the observation window W around the central axis of the concentric circles in order relatively to change the irradiation position of the irradiation light on the concentric circles. This enables the spectroscopic analysis device 1 to perform the reference measurement simply by rotating the observation window W via the operating portion 20 to rotate the irradiation position of the irradiation light relatively. As another example, the change mechanism may include a rotation mechanism that rotates both the position of the inner tube T2 and the observation window W around the central axis of the concentric circles in order relatively to change the irradiation position of the irradiation light on the concentric circles.

Alternatively, the change mechanism may include a slide mechanism that translates the observation window W in order relatively to change the irradiation position of the irradiation light on the concentric circles. This enables the spectroscopic analysis device 1 to perform the reference measurement simply by translating the observation window W via the operating portion 20 to translate the irradiation position of the irradiation light relatively. As another example, the change mechanism may include a slide mechanism that translates both the inner tube T2 and the observation window W in order relatively to change the irradiation position of the irradiation light on the concentric circles.

In the first embodiment, the controller 80 has been described as automatically performing the rotation of the inner tube T2 via the rotation mechanism of the operating portion 20, but this configuration is not limiting. The rotation of the inner tube T2 may be performed manually by the user.

### (Second Embodiment)

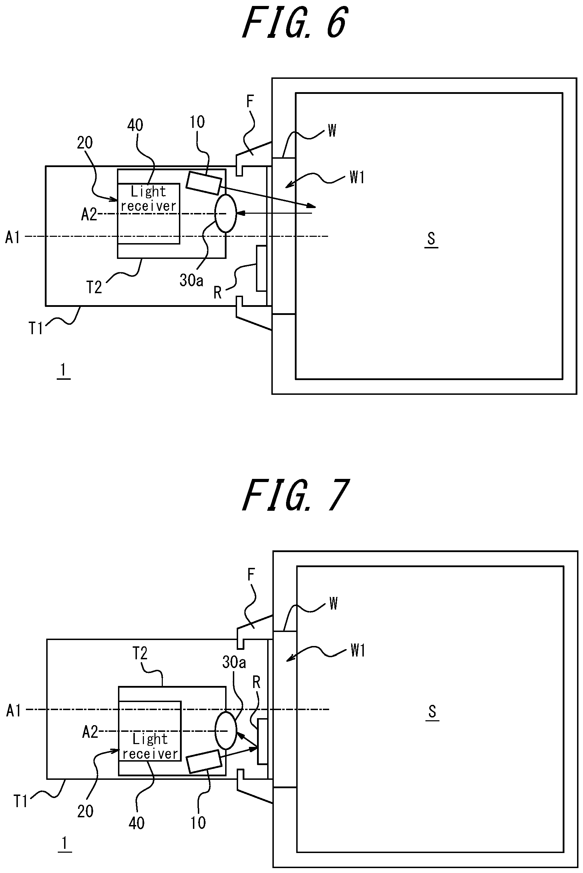

FIG. 6 is a first schematic diagram illustrating an example configuration of a spectroscopic analysis device 1 according to a second embodiment of the present disclosure. FIG. 6 illustrates the first rotational position of the inner tube T2 as in FIG. 1. FIG. 7 is a second schematic diagram illustrating an example configuration of the spectroscopic analysis device 1 according to the second embodiment of the present disclosure. FIG. 7 illustrates the second rotational position of the inner tube T2 as in FIG. 2. In FIGS. 6 and 7, the memory 50, the input interface 60, the output interface 70, and the controller 80 of the spectroscopic analysis device 1 are omitted, and only part of the configuration of the spectroscopic analysis device 1 is illustrated. With reference to FIGS. 6 and 7, an example of the configuration and functions of the spectroscopic analysis device 1 according to the second embodiment are mainly described.

The spectroscopic analysis device 1 according to the second embodiment differs from the first embodiment in that the light guide 30b is omitted, and the light receiver 40 is also arranged inside the inner tube T2 together with the irradiator 10. The other configurations, functions, effects, variations, and the like are the same as those of the first embodiment, and the corresponding descriptions also apply to the spectroscopic analysis device 1 according to the second embodiment. Configurations that are the same as in the first embodiment are labeled below with the same reference signs, and a description thereof is omitted. The points that differ from the first embodiment will mainly be explained.

In the first embodiment, the spectroscopic analysis device 1 has been described as guiding the reflected light via the light guide 30b to the light receiver 40, but this configuration is not limiting. Instead of a configuration in which the light receiver 40 is positioned outside the inner tube T2 and the tube T1 with the light guide 30b therebetween, the spectroscopic analysis device 1 may have a configuration such that the light receiver 40 is contained inside the tube T1 and the inner tube T2. In this case, cables for supplying power and for data communication with the light receiver 40 and the like may extend from the tube T1 to the outside, or a battery may be provided inside the tube T1 and data communication may be achieved by wireless communication means.

In addition to the effects in the first embodiment, the above-described spectroscopic analysis device 1 according to the second embodiment obtains the addition effect of compactly organizing the entire optical system, including the light receiver 40, thereby facilitating a reduction in size of the device overall.

### (Third Embodiment)

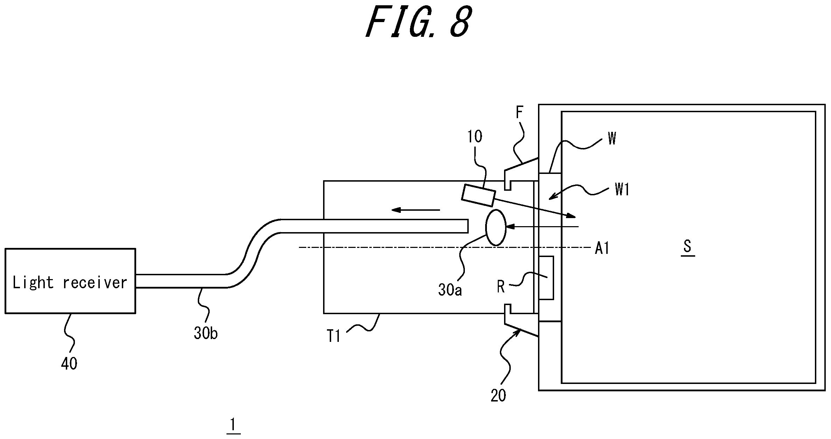

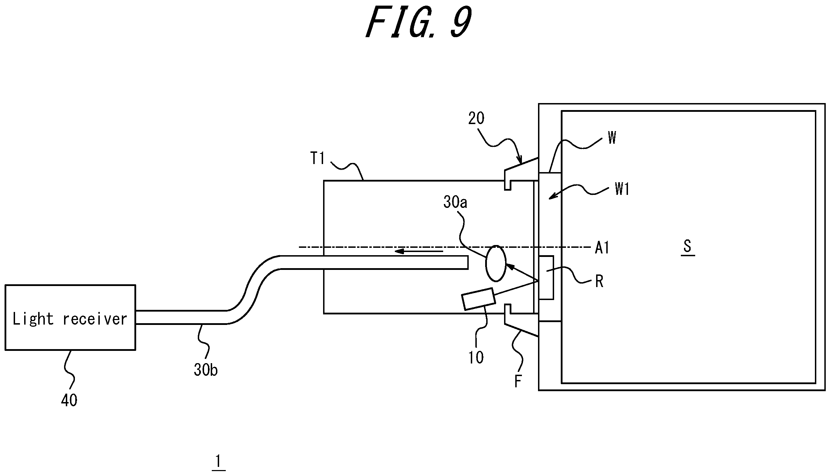

FIG. 8 is a first schematic diagram illustrating an example configuration of a spectroscopic analysis device 1 according to a third embodiment of the present disclosure. FIG. 8 illustrates the configuration of the spectroscopic analysis device 1 in the case in which the irradiation light from the irradiator 10 is irradiated towards the transmission space W1, as in FIG. 1. FIG. 9 is a second schematic diagram illustrating an example configuration of the spectroscopic analysis device 1 according to the third embodiment of the present disclosure. FIG. 9 illustrates the configuration of the spectroscopic analysis device 1 in the case in which the irradiation light from the irradiator 10 is irradiated towards the reference material R, as in FIG. 2. In FIGS. 8 and 9, the memory 50, the input interface 60, the output interface 70, and the controller 80 of the spectroscopic analysis device 1 are omitted, and only part of the configuration of the spectroscopic analysis device 1 is illustrated. With reference to FIGS. 8 and 9, an example of the configuration and functions of the spectroscopic analysis device 1 according to the third embodiment are mainly described.

The spectroscopic analysis device 1 according to the third embodiment differs from the first and second embodiments in that the irradiator 10 is contained in the tube T1 with the inner tube T2 omitted, the reference material R is arranged in the observation window W, and the operating portion 20 includes a rotation mechanism that rotates the tube T1. The other configurations, functions, effects, variations, and the like are the same as those of the first and second embodiments, and the corresponding descriptions also apply to the spectroscopic analysis device 1 according to the third embodiment. Configurations that are the same as in the first and second embodiments are labeled below with the same reference signs, and a description thereof is omitted. The points that differ from the first and second embodiments will mainly be explained.

Instead of being contained in the inner tube T2 as in the first and second embodiments, the irradiator 10 may be directly contained in the tube T1, with the inner tube T2 being omitted. The reference material R may be fixed together with the transmission space W1 at the observation window W. The positional relationship at the observation window W between the transmission space W1 and the reference material R in this case may, for example, be the same as that illustrated in FIG. 3. In other words, the transmission space W1 and the reference material R may be arranged at different positions from each other on concentric circles at the observation window W. The rotation mechanism of the operating portion 20 may rotate the tube T1 around the central axis of the concentric circles.

The rotation mechanism of the operating portion 20 may include a mechanism that the fixture F has for rotating the tube T1. For example, the rotation mechanism of the operating portion 20 may include a mechanism for a rotating base in the fixture F corresponding to the structure on the tube T1 side. The rotation mechanism of the operating portion 20 may also include a motor, such as a stepping motor, and an air-driven actuator to drive and control the position of the rotating base.

The rotation mechanism of the operating portion 20 drives and controls the tube T1 to the first rotational position illustrated in FIG. 8, thereby guiding the irradiation light to the transmission space W1. The irradiation position of the irradiation light from the irradiator 10 on the concentric circles matches the transmission space W1. This enables sample measurement, by the controller 80, using the object to be measured.

On the other hand, the rotation mechanism of the operating portion 20 drives and controls the tube T1 to the second rotational position illustrated in FIG. 2, thereby guiding the irradiation light to the reference material R instead of the transmission space W1. The irradiation position of the irradiation light from the irradiator 10 on the concentric circles matches the reference material R. This enables reference measurement, by the controller 80, using the reference material R.

The rotation mechanism of the operating portion 20 rotates the tube T1 around the central axis of the concentric circles. This enables the spectroscopic analysis device 1 to perform the reference measurement simply by rotating the tube T1 around the central axis of the concentric circles via the operating portion 20.

In the third embodiment, the controller 80 may read the first rotational position of the tube T1 as illustrated in FIG. 8 and the second rotational position of the tube T1 as illustrated in FIG. 9 by referring to the memory 50 and may automatically perform rotation of the tube T1 via the rotation mechanism of the operating portion 20. Alternatively, the rotation of the tube T1 may be performed manually by the user.

### (Fourth Embodiment)

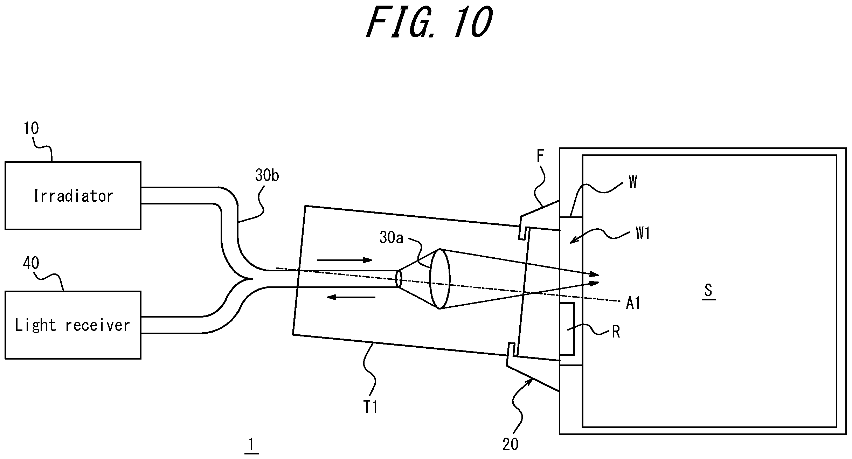

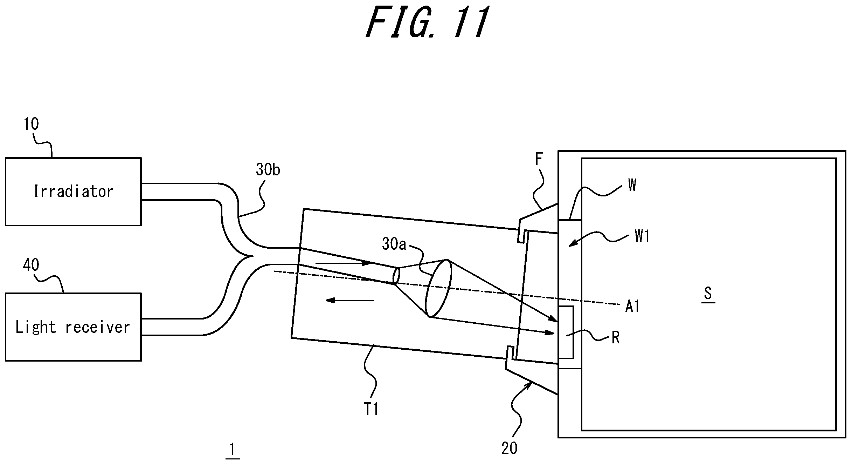

FIG. 10 is a first schematic diagram illustrating an example configuration of a spectroscopic analysis device 1 according to a fourth embodiment of the present disclosure. FIG. 10 illustrates the configuration of the spectroscopic analysis device 1 in the case in which the irradiation light from the irradiator 10 is irradiated towards the transmission space W1, as in FIG. 1. FIG. 11 is a second schematic diagram illustrating an example configuration of the spectroscopic analysis device 1 according to the fourth embodiment of the present disclosure. FIG. 11 illustrates the configuration of the spectroscopic analysis device 1 in the case in which the irradiation light from the irradiator 10 is irradiated towards the reference material R, as in FIG. 2. In FIGS. 10 and 11, the memory 50, the input interface 60, the output interface 70, and the controller 80 of the spectroscopic analysis device 1 are omitted, and only part of the configuration of the spectroscopic analysis device 1 is illustrated. With reference to FIGS. 10 and 11, an example of the configuration and functions of the spectroscopic analysis device 1 according to the fourth embodiment are mainly described.

The spectroscopic analysis device 1 according to the fourth embodiment differs from the first through third embodiments in that the irradiator 10 is not arranged inside the tube T1, but rather outside the tube T1. The other configurations, functions, effects, variations, and the like are the same as those of the first through third embodiments, and the corresponding descriptions also apply to the spectroscopic analysis device 1 according to the fourth embodiment. Configurations that are the same as in the first through third embodiments are labeled below with the same reference signs, and a description thereof is omitted. The points that differ from the first through third embodiments will mainly be explained.

Instead of being contained in the tube T1 as in the first through third embodiments, the irradiator 10 may be arranged outside the tube T1, with the light guide 30b therebetween. The tube T1 is attached to the sample chamber S by the fixture F, with only the light collector 30a and a portion of the light guide 30b fixed inside the tube T1. In this case, the optical axis determined by the fixed position of the light collector 30a and a portion of the light guide 30b may be inclined at any angle with respect to the central axis A1 of the tube T1, i.e., the rotation axis. As the tube T1 rotates, the position of intersection between the observation window W and the optical axis, i.e., the irradiation position of the irradiation light from the irradiator 10, thereby changes.

The reference material R may be fixed together with the transmission space W1 at the observation window W. The positional relationship at the observation window W between the transmission space W1 and the reference material R in this case may, for example, be the same as that illustrated in FIG. 3. In other words, the transmission space W1 and the reference material R may be arranged at different positions from each other on concentric circles at the observation window W.

In this case, the light guide 30b may guide the irradiation light irradiated from the light source of the irradiator 10 to the light collector 30a. In the example illustrated in FIG. 10, the light guide 30b may guide the irradiation light through the light collector 30a and the observation window W to the object to be measured, which is arranged inside the sample chamber S. In the example illustrated in FIG. 11, the light guide 30b may guide the irradiation light through the light collector 30a to the reference material R arranged in the observation window W. The light guide 30b may have the function of guiding the irradiation light from the irradiator 10 to the object to be measured and the reference material R and the function of guiding the reflected light to the light receiver 40.

In the example illustrated in FIG. 10, the light collector 30a may collect the irradiation light guided by the light guide 30b from the irradiator 10 and efficiently irradiate the object to be measured arranged inside the sample chamber S. In the example illustrated in FIG. 11, the light collector 30a may collect the irradiation light guided by the light guide 30b from the irradiator 10 and efficiently irradiate the reference material R arranged in the observation window W.

The change mechanism of the operating portion 20 may include a rotation mechanism that rotates the tube T1 around its central axis A1. As in the third embodiment, the rotation mechanism of the operating portion 20 may include a mechanism that the fixture F has for rotating the tube T1. For example, the rotation mechanism of the operating portion 20 may include a mechanism for a rotating base in the fixture F corresponding to the structure on the tube T1 side. The rotation mechanism of the operating portion 20 may also include a motor, such as a stepping motor, and an air-driven actuator to drive and control the position of the rotating base.

The rotation mechanism of the operating portion 20 drives and controls the tube T1 to the first rotational position illustrated in FIG. 10, thereby guiding the irradiation light to the transmission space W1. The irradiation position of the irradiation light from the irradiator 10 on the concentric circles matches the transmission space W1. This enables sample measurement, by the controller 80, using the object to be measured.

On the other hand, the rotation mechanism of the operating portion 20 drives and controls the tube T1 to the second rotational position illustrated in FIG. 11, thereby guiding the irradiation light to the reference material R instead of the transmission space W1. The irradiation position of the irradiation light from the irradiator 10 on the concentric circles matches the reference material R. This enables reference measurement, by the controller 80, using the reference material R.

The change mechanism of the operating portion 20 includes a rotation mechanism that rotates the tube T1 around the central axis A1. This enables the spectroscopic analysis device 1 to perform the reference measurement simply by rotating the tube T1 around the central axis A1 via the operating portion 20.

The above-described configuration in the fourth embodiment is not limiting, and the change mechanism may include a rotation mechanism that rotates the observation window W around the central axis of concentric circles in order relatively to change the irradiation position of the irradiation light on the concentric circles. This enables the spectroscopic analysis device 1 to perform the reference measurement simply by rotating the observation window W via the operating portion 20 to rotate the irradiation position of the irradiation light relatively. As another example, the change mechanism may include a rotation mechanism that rotates both the tube T1 and the observation window W respectively around the central axis A1 and the central axis of concentric circles in order relatively to change the irradiation position of the irradiation light on the concentric circles.

Alternatively, the change mechanism of the operating portion 20 may include a slide mechanism that translates the tube T1. The slide mechanism may translate the tube T1, which contains the light collector 30a, in a direction parallel to the surface of the observation window W. This enables the spectroscopic analysis device 1 to perform the reference measurement simply by translating the irradiation position of the irradiation light via the operating portion 20.

Alternatively, the change mechanism of the operating portion 20 may include a slide mechanism that translates the observation window W in order relatively to change the irradiation position of the irradiation light on concentric circles. This enables the spectroscopic analysis device 1 to perform the reference measurement simply by translating the observation window W via the operating portion 20 to translate the irradiation position of the irradiation light relatively. As another example, the change mechanism may include a slide mechanism that translates both the tube T1 and the observation window W in order relatively to change the irradiation position of the irradiation light on concentric circles.

It will be clear to a person of ordinary skill in the art that the present disclosure may be implemented in certain ways other than the above embodiments without departing from the spirit or essential features thereof. Accordingly, the above explanation merely provides examples that are in no way limiting. The scope of the present disclosure is to be defined by the appended claims, not by the above explanation. Among all changes, various changes that are within the range of equivalents are considered to be included therein.

For example, the shape, pattern, size, arrangement, orientation, type, number, and the like of the above-described components are not limited to the above explanation or the drawings. The shape, pattern, size, arrangement, orientation, type, number, and the like of each component may be selected freely as long as the functions of the component can be achieved. The constituent elements of the spectroscopic analysis device 1 in the drawings are illustrated as functional concepts, and the specific form of each constituent element is not limited to the form in the drawings.

The functions or the like included in the above-described components or steps may be reordered in any logically consistent way. Furthermore, components or steps may be combined into one or divided.

For example, a general purpose electronic device, such as a smartphone or a computer, can also be caused to function as the spectroscopic analysis device 1 according to the above embodiment. Specifically, a program describing the processing content for realizing the functions of the spectroscopic analysis device 1 according to an embodiment is stored in a memory of the electronic device, and the program is read and executed by the processor of the electronic device. Accordingly, the present disclosure can also be embodied as a program executable by a processor.

Alternatively, the present disclosure can also be realized as a non-transitory computer readable medium storing a program executable by one or more processors to cause the spectroscopic analysis device 1 or the like according to an embodiment to execute each function. Such embodiments are also to be understood as falling within the scope of the present disclosure.

The spectroscopic analysis device 1 according to the above embodiment can be applied to reference measurement and reflectance conversion of spectrometers using the diffuse reflection method.

Some embodiments of the present disclosure are exemplified below. It should be noted that the embodiments of the present disclosure are not, however, limited to these examples.
[Appendix 1] A spectroscopic analysis device comprising:
   an irradiator configured to irradiate irradiation light on an object to be measured;
   a light receiver configured to receive reflected light based on the irradiation light from the object to be measured;
   a controller configured to analyze, based on the reflected light, an optical property of the object to be measured; and
   an operating portion configured to guide the irradiation light by switching between at least one transmission space that guides the irradiation light to the object to be measured at an observation window and at least one reference material arranged in at least one of the observation window and a tube covering the observation window.
[Appendix 2] The spectroscopic analysis device according to appendix 1, wherein
   the transmission space and the reference material are arranged at different positions from each other on concentric circles as viewed from a side of incidence of the irradiation light on the observation window, and
   the operating portion includes a change mechanism configured relatively to change an irradiation position of the irradiation light on the concentric circles.
[Appendix 3] The spectroscopic analysis device according to appendix 2, wherein the irradiator is arranged inside the tube.
[Appendix 4] The spectroscopic analysis device according to appendix 3, wherein the change mechanism includes a rotation mechanism configured to rotate a position of the irradiator around a central axis of the concentric circles.
[Appendix 5] The spectroscopic analysis device according to appendix 4, wherein
   the reference material is fixed together with the transmission space at the observation window, and
   the change mechanism includes a first rotation mechanism configured to rotate the tube around the central axis.
[Appendix 6] The spectroscopic analysis device according to appendix 4 or 5, wherein
   the reference material is fixed to the tube, and
   the change mechanism includes a second rotation mechanism configured to rotate a position of an inner tube around the central axis, the inner tube being arranged inside the tube and housing the irradiator.
[Appendix 7] The spectroscopic analysis device according to any one of appendices 3 to 5, wherein
   the reference material is fixed together with the transmission space at the observation window, and
   the change mechanism includes a third rotation mechanism configured to rotate the observation window around a central axis of the concentric circles.
[Appendix 8] The spectroscopic analysis device according to any one of appendices 3 to 7, wherein the change mechanism includes a first slide mechanism configured to translate the irradiator inside the tube.
[Appendix 9] The spectroscopic analysis device according to any one of appendices 3 to 5, wherein
   the reference material is fixed together with the transmission space at the observation window, and
   the change mechanism includes a second slide mechanism configured to translate the observation window.
[Appendix 10] The spectroscopic analysis device according to appendix 2, wherein
   the reference material is fixed together with the transmission space at the observation window, and
   the irradiator is arranged outside the tube.
[Appendix 11] The spectroscopic analysis device according to appendix 10, wherein the change mechanism includes a fourth rotation mechanism configured to rotate the tube around a central axis of the tube.
[Appendix 12] The spectroscopic analysis device according to appendix 10 or 11, wherein the change mechanism includes a fifth rotation mechanism configured to rotate the observation window around a central axis of the concentric circles.
[Appendix 13] The spectroscopic analysis device according to any one of appendices 10 to 12, wherein the change mechanism includes a third slide mechanism configured to translate the tube.
[Appendix 14] The spectroscopic analysis device according to any one of appendices 10 to 13, wherein the change mechanism includes a fourth slide mechanism configured to translate the observation window.
[Appendix 15] The spectroscopic analysis device according to any one of appendices 1 to 14, wherein the at least one transmission space comprises a plurality of transmission spaces with different transmittances, and the operating portion is configured to guide the irradiation light to one transmission space, among the plurality of transmission spaces, selected according to at least one of an intensity of the irradiation light and a type of the object to be measured.
[Appendix 16] The spectroscopic analysis device according to any one of appendices 1 to 15, wherein the at least one reference material comprises a plurality of reference materials with different reflectances, and the operating portion is configured to guide the irradiation light to one reference material, among the plurality of reference materials, selected according to a type of the object to be measured.
[Appendix 17] A spectroscopic analysis method comprising:
   irradiating irradiation light on an object to be measured;
   receiving reflected light based on the irradiation light from the object to be measured;
   analyzing, based on the reflected light, an optical property of the object to be measured; and
   guiding the irradiation light by switching between a transmission space that guides the irradiation light to the object to be measured at an observation window and a reference material arranged in at least one of the observation window and a tube covering the observation window.

## Claims

1. A spectroscopic analysis device comprising:
an irradiator configured to irradiate irradiation light on an object to be measured;
a light receiver configured to receive reflected light based on the irradiation light from the object to be measured;
a controller configured to analyze, based on the reflected light, an optical property of the object to be measured; and
an operating portion configured to guide the irradiation light by switching between at least one transmission space that guides the irradiation light to the object to be measured at an observation window and at least one reference material arranged in at least one of the observation window and a tube covering the observation window.

2. The spectroscopic analysis device according to claim 1, wherein
the transmission space and the reference material are arranged at different positions from each other on concentric circles as viewed from a side of incidence of the irradiation light on the observation window, and
the operating portion includes a change mechanism configured relatively to change an irradiation position of the irradiation light on the concentric circles.

3. The spectroscopic analysis device according to claim 2, wherein the irradiator is arranged inside the tube.

4. The spectroscopic analysis device according to claim 3, wherein the change mechanism includes a rotation mechanism configured to rotate a position of the irradiator around a central axis of the concentric circles.

5. The spectroscopic analysis device according to claim 4, wherein
the reference material is fixed together with the transmission space at the observation window, and
the change mechanism includes a first rotation mechanism configured to rotate the tube around the central axis.

6. The spectroscopic analysis device according to claim 4 or 5, wherein
the reference material is fixed to the tube, and
the change mechanism includes a second rotation mechanism configured to rotate a position of an inner tube around the central axis, the inner tube being arranged inside the tube and housing the irradiator.

7. The spectroscopic analysis device according to any one of claims 3 to 5, wherein
the reference material is fixed together with the transmission space at the observation window, and
the change mechanism includes a third rotation mechanism configured to rotate the observation window around a central axis of the concentric circles.

8. The spectroscopic analysis device according to any one of claims 3 to 5, wherein the change mechanism includes a first slide mechanism configured to translate the irradiator inside the tube.

9. The spectroscopic analysis device according to any one of claims 3 to 5, wherein
the reference material is fixed together with the transmission space at the observation window, and
the change mechanism includes a second slide mechanism configured to translate the observation window.

10. The spectroscopic analysis device according to claim 2, wherein
the reference material is fixed together with the transmission space at the observation window, and
the irradiator is arranged outside the tube.

11. The spectroscopic analysis device according to claim 10, wherein the change mechanism includes a fourth rotation mechanism configured to rotate the tube around a central axis of the tube.

12. The spectroscopic analysis device according to claim 10 or 11, wherein the change mechanism includes a fifth rotation mechanism configured to rotate the observation window around a central axis of the concentric circles.

13. The spectroscopic analysis device according to any one of claims 1 to 5, wherein the at least one transmission space comprises a plurality of transmission spaces with different transmittances, and the operating portion is configured to guide the irradiation light to one transmission space, among the plurality of transmission spaces, selected according to at least one of an intensity of the irradiation light and a type of the object to be measured.

14. The spectroscopic analysis device according to any one of claims 1 to 5, wherein the at least one reference material comprises a plurality of reference materials with different reflectances, and the operating portion is configured to guide the irradiation light to one reference material, among the plurality of reference materials, selected according to a type of the object to be measured.

15. A spectroscopic analysis method comprising:
irradiating irradiation light on an object to be measured;
receiving reflected light based on the irradiation light from the object to be measured;
analyzing, based on the reflected light, an optical property of the object to be measured; and
guiding the irradiation light by switching between a transmission space that guides the irradiation light to the object to be measured at an observation window and a reference material arranged in at least one of the observation window and a tube covering the observation window.
